# EUROPÄISCHE PATENTSCHRIFT

(11) **EP 0 525 920 B1**
(45) Veröffentlichungstag und Bekanntmachung des Hinweises auf die Patenterteilung: **15.01.1997**
(21) Anmeldenummer: 92250166.3
(22) Anmeldetag: 23.06.1992
(51) Int. Cl.: G08C 19/02, H02M 3/335

(54) **Schaltungsanordnung zur Energieversorgung von Feldgeräten**
Circuit for remote power supply of 2-wire field transmitters
Circuit de téléalimentation pour transmetteurs à deux fils

(30) Priorität: 28.06.1991 DE 4121961
(43) Veröffentlichungstag der Anmeldung: 03.02.1993
(73) Patentinhaber: SIEMENS AKTIENGESELLSCHAFT, 80333 München (DE)
(72) Erfinder: Lesche, Wolfgang, W-1000 Berlin 37 (DE); Nusche, Georg, W-1000 Berlin 13 (DE)

(56) Entgegenhaltungen:
- EP-A- 0 172 487
- DE-A- 2 321 900
- GB-A- 2 229 897
- US-A- 3 959 786
- US-A- 4 292 633
- US-A- 4 758 937

## Beschreibung

Die Erfindung betrifft eine Schaltungsanordnung zur Energieversorgung von über Zweileiterstromkreise gespeisten elektronisch steuerbaren Feldgeräten, vorzugsweise Stellungsregler und Meßumformer, mit über die Zweileiterstromkreise durch Variation einer Stromgröße übertragbaren Istinformationen.

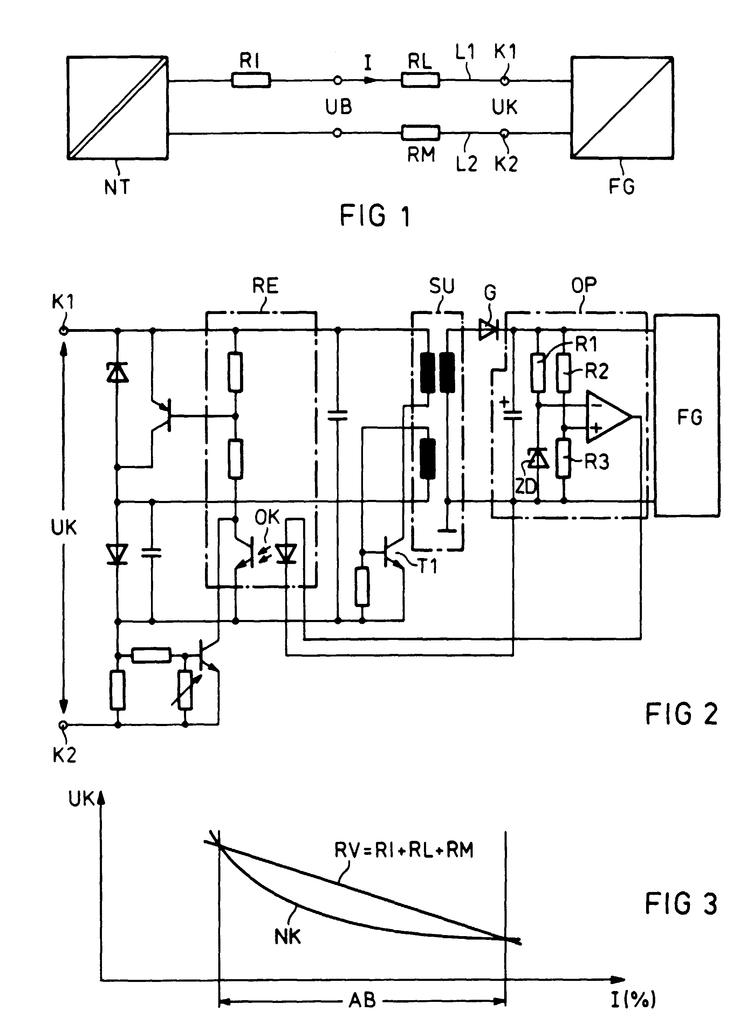

Bei einer bekannten Schaltungsanordnung dieser Art handelt es sich um ein Netzteil NT (vgl. Figur 1) mit einem Innenwiderstand RI. Von dem Netzteil NT wird - wie Figur 1 ferner zeigt - eine Betriebsspannung UB erzeugt. Diese Betriebsspannung UB wird in bekannter Weise über zwei Leitungen L1 und L2 (der Widerstand RL gibt ihren Ersatzwiderstand an) an Klemmen K1 und K2 eines Feldgerätes FG gelegt. Handelt es sich bei dem Feldgerät um einen Meßumformer, dann wird durch eine in Figur 1 nicht dargestellte, von außen einwirkende physikalische Größe der im Kreise mit den zwei Leitungen L1 und L2 fließende Strom I entsprechend verändert. Diese Stromänderungen können mit einer in der Regel in räumliche Nähe zum Netzteil NT angeordneten Meßanordnung erfaßt werden, die in Figur 1 durch ihren Ersatzwiderstand RM dargestellt ist. Am Feldgerät FG steht an den Klemmen K1 und K2 eine Klemmspannung UK an. Bei einem Stellungsregler als Feldgerät wird eine Istinformation über eine Ortsentfernung hinweg mittels der Leitungen L1 und L2 übertragen und durch geeignete Steuerungen ihrer Stellglieder entsprechend ausgewertet. Als Istinformationen sind die unterschiedlichen Werte des Stromes I vorgesehen, die zusammen mit der Energieversorgung der Feldgeräte über den Zweileiterstromkreis übertragen werden.

Der Mindestenergiebedarf der Feldgeräte und die im gesamten Aussteuerbereich zu übertragende Istinformation sind unmittelbar abhängig von dem Gesamtwiderstand der Ubertragungsstrecke, wobei sich der Gesamtwiderstand aus den Teilkomponenten Innenwiderstand RI des Netzteils NT, Leitungswiderstand RL der Übertragungsstrecke und Widerstand RM der Meßanordnung zusammen setzt. Durch die unterschiedlichen Leitungslängen ist der Leitungswiderstand als variable Größe anzusehen, die - eine bestimmte Mindestenergieversorgung der Feldgeräte vorausgesetzt - nur in bestimmten Grenzen schwanken kann.

GB-A-2 229 897 zeigt eine Vorrichtung welche die Feldgeräte über den Aussteuerbereich des Stromes mit einer annähernd Konstanten leistung versorgt.

Die Erfindung ist durch die anhängenden Ansprüche definiert.

Die der Erfindung zugrundeliegende Aufgabe besteht darin, eine Schaltungsanordnung zu definieren, die hinsichtlich der ausreichenden Energieversorgung der Feldgeräte einen höheren Leitungswiderstand zuläßt, ohne dabei zusätzlichen Aufwand für leistungsarme und entsprechend teure Bauelemente in den Feldgeräten vorsehen zu müssen. Erfindungsgemäß wird dies dadurch erreicht, daß die Energieversorgung durch eine als Sperrschwinger ausgebildete Spannungsübertragungseinrichtung erfolgt und daß mittels einer auf der Sekundärseite den Spannungsunterschied zwischen einem Sollwert und einem Istwert ermittelnden Regelverstärkereinrichtung derart auf eine auf der Primärseite angeordnete Regeleinrichtung eingewirkt ist, daß die an die elektronisch steuerbaren Feldgeräte übertragbare Leistung über den gesamten Aussteuerbereich der Istinformation annähernd konstant ist.

Da der Schwingermodus der Spannungsübertragungseinrichtung mit einem Sperrschwinger erzeugt ist, ist eine galvanischer Trennung von Primär- und Sekundärseite mit einem Minimum von Bauteilen zu realisieren.

Eine derartige Rückkopplung bewirkt, daß mit zunehmendem Stromanstieg die Klemmenspannung hyperbelförmig absinkt und zwar so, daß das Produkt aus Klemmenspannung und Strom-Istinformation über den gesamten Aussteuerbereich eine annähernd konstante Leistungsgröße darstellt. Daraus ist ersichtlich, daß die Differenz zwischen der vom Netzteil erzeugten Betriebsspannung und der von den Feldgeräten benötigten Klemmenspannung zur Aufrechterhaltung einer ausreichenden Energieversorgung über den gesamten Aussteuerbereich hinweg größer ist als ohne die erfindungsgemäßen Rückkopplungsmaßnahmen. Dies bedeutet in der Praxis, daß die Leitungswiderstände bei gleichen Leistungsverhältnissen entsprechend ansteigen können bzw. die Entfernung zwischen dem Entstehungsort der Istinformation und deren Aufnahme und Auswertung entsprechend vergrößert sein kann. Als wesentlich für die Erfindung ist in diesem Zusammenhang anzusehen, daß die Mindest-Klemmenspannung der Feldgeräte bei maximaler Stromgröße gegenüber den sonst üblichen Werten erheblich verringert sein kann, da - wie bereits erwähnt - die Stromgröße als Istinformation bei konstanter Leistung voll zur Wirkung gelangt.

Eine vorteilhafte Ausgestaltung der Erfindung sieht vor, daß der Festwert-Spannungsteiler aus der Reihenschaltung eines Widerstandes und einer Zenerdiode gebildet ist, und damit in einfacher Weise in Verbindung mit dem Istwert-Spannungsteiler eine auswertbare Regelgröße geschaffen ist.

Eine weitere vorteilhafte Ausgestaltung der Erfindung ist damit erreicht, daß die der Primärseite der Spannungsübertragungseinrichtung parallelgeschaltete Regeleinrichtung eine Optokopplereinrichtung enthält, mit der die charakteristische Kennlinie des Netzteils zur Energieversorgung der Feldgeräte unmittelbar beeinflußbar ist.

Zur Erläuterung der Erfindung ist in

- Figur 2: ein Ausführungsbeispiel einer erfindungsgemäßen Schaltungsanordnung zur Energieversorgung von Feldgeräten und in
- Figur 3: die Kennlinie der erfindungsgemäßen Schaltungsanordnung im Spannungs-/Stromdiagramm dargestellt.

Der Figur 2 sind wesentliche Schaltkomponenten der Schaltungsanordnung zur Energieversorgung des Feldgerätes FG zu entnehmen, die im Vergleich zu einer bekannten Zweileiteranordnung (vgl. Figur 1) zusätzlich zwischen den Klemmen K1 und K2 und dem Eingang des Feldgerätes angeordnet ist. Die Schaltungsanordnung enthält unter anderem eine Spannungsübertragungseinrichtung SU und eine Regelverstärkereinrichtung OP im Sekundärbereich der Spannungsübertragungseinrichtung SU sowie eine Regeleinrichtung RE im Primärbereich der Spannungsübertragungseinrichtung SU. Die im Sperrschwingermodus betriebene Spannungsübertragungseinrichtung SU induziert mit einer in ihrem Primärbereich angeordneten Schaltstufe mit einem Transistor T1 in bekannter Weise eine pulsierende Gleichspannung, die durch einen Gleichrichter G im Sekundärbereich gleichgerichtet wird. Mit der im Sekundärkreis angeordneten Regelverstärkereinrichtung OP wird der Spannungsunterschied zwischen dem aus einer Zenerdiode ZD und einem Reihenwiderstand R1 gebildeten Festwert-Spannungsteiler und dem dazu parallelgeschalteten Istwert-Spannungsteiler mit Widerständen R2 und R3 ermittelt und der im Primärkreis befindlichen Regeleinrichtung RE zugeführt. Mit dem rückgekoppelten Signal wird eine Optokopplereinrichtung OK innerhalb der Regeleinrichtung RE derart gesteuert, daß die Klemmenspannung UK in Verbindung mit dem jeweils eingeprägten Strom - Istinformation - eine annähernd konstante Leistung ergibt.

In der Figur 3 ist das Spannungs-/Stromdiagramm der Schaltungsanordnung nach Fig. 2 dargestellt. Im Aussteuerbereich AB sind eingetragen die Widerstandsgerade für einen auf den Zweileiterstromkreis bezogenen Gesamtwiderstand RV, der sich aus den Teilkomponenten Innenwiderstand RI, Leitungswiderstand RL und Widerstand RM der Meßanordnung zusammensetzt, und die Leistungscharakteristik NK der Schaltungsanordnung. Mit dieser Darstellung wird deutlich, daß die notwendige Klemmenspannung UK mit dem ansteigenden Stromwert I (Istinformation) abnehmen kann, so daß die volle Spannungsdifferenz zwischen der Betriebsspannung UB und der Klemmenspannung UK der Zulassung eines erhöhten Leitungswiderstandes RL zugute kommt.

## Patentansprüche

1. Schaltungsanordnung zur Energieversorgung von über Zweileiterstromkreise gespeisten elektronisch steuerbaren Feldgeräten, vorzugsweise Stellungsregler und Meßumformer, mit über die Zweileiterstromkreise durch Variation der Stromgröße übertragbaren Istinformationen,
**dadurch gekennzeichnet,** daß die Energieversorgung durch eine als Sperrschwinger ausgebildete Spannungsübertragungseinrichtung (SU,T1) erfolgt und daß mittels einer auf der Sekundärseite den Spannungsunterscheid zwischen einem Sollwert und einem Istwert ermittelnden Regelverstärkereinrichtung (OP) derart auf eine auf der Primärseite angeordnete Regeleinrichtung (RE) eingewirkt ist, daß bei über den gesamten Ansteuerbereich (AB) der Istinformation annähernd konstanter Leistungsabgabe an das Feldgerät eine eingangsseitige Klemmenspannung (UK) der Schaltungsanordnung mit zunehmender Stromgröße (I) hyperbelförmig absinkt.

2. Schaltungsanordnung nach Anspruch 1,
**dadurch gekennzeichnet**, daß ein Festwert-Spannungsteiler aus der Reihenschaltung eines Widerstandes (R1) und einer Zenerdiode (ZD) gebildet ist.

3. Schaltungsanordnung nach Anspruch 1,
**dadurch gekennzeichnet,** daß die der Primärseite der Spannungsübertragungseinrichtung (SU,T1) parallel geschaltete Regeleinrichtung (RE) eine Optokopplereinrichtung (OK) enthält.

## Claims

1. Circuit arrangement for the energy supply of electronically controllable field devices, preferably positioners and measuring transducers, which field devices are supplied via two-wire electric circuits, having items of actual information that can be transmitted via the two-wire electric circuits by varying a current variable, characterised in that the energy supply takes place by means of a voltage-transmitting device (SU, T1) which is constructed as a blocking oscillator, and in that by means of a control amplifying device (OP), which on the secondary side determines the voltage difference between a desired value and an actual value, the control device (RE) which is arranged on the primary side is acted upon in such a way that in the case of power output to the field device that is approximately constant over the whole output range (AB) of the actual information, an input-side terminal voltage (UK) of the switching arrangement decreases in the shape of a hyperbole as the current variable (I) increases.

2. Circuit arrangement according to claim 1,
characterised in that a fixed-value voltage divider is formed from the series circuit arrangement of a resistor (R1) and a Zener diode (ZD).

3. Circuit arrangement according to claim 1,
characterised in that the control device (RE) which is connected in parallel with the primary side of voltage-transmitting device (SU, T1) contains an optocoupling device (OK).

## Revendications

1. Montage pour alimenter en énergie des appareils de champ, de préférence des positionneurs et des convertisseurs de mesure, alimenté par l'intermédiaire de circuits à deux conducteurs et pouvant être commandés électroniquement, et à les alimenter en informations réelles pouvant être transmises par l'intermédiaire des circuits à deux conducteurs par variation de la grandeur du courant,
caractérisé en ce que
l'alimentation en énergie s'effectue par un dispositif (SU, T1) de transmission de tension formé comme oscillateur de blocage et il est exercé, au moyen d'un dispositif (OP) d'amplificateur de régulation déterminant du côté secondaire la différence de tension entre une valeur de consigne et une valeur réelle, une action sur un dispositif (RE) de régulation disposé du côté primaire, de telle sorte que lorsque la puissance fournie à l'appareil de champ est à peu près constante sur l'ensemble de la plage (AB) de commande de l'information réelle, une tension (UK) du côté entrée aux bornes du montage diminue de manière hyperbolique lorsque la grandeur (I) du courant augmente.

2. Montage suivant la revendication 1,
caractérisé en ce que
un diviseur de tension de valeur fixe est formé du circuit série d'une résistance (R1) et d'une diode Zener (ZD).

3. Montage suivant la revendication 1,
caractérisé en ce que
le dispositif (RE) de régulation branché en parallèle avec le côté primaire du dispositif (SU, T1) de transmission de tension comprend un dispositif (OK) d'optocoupleur.
